# EUROPEAN PATENT SPECIFICATION

(11) **EP 1 578 655 B1**
(45) Date of publication and mention of the grant of the patent: **27.09.2006**
(21) Application number: 03768464.4
(22) Date of filing: 18.12.2003
(51) Int. Cl.: B62D 33/06, B62D 24/04

(54) **STABILIZER**
STABILISATOR
STABILISATEUR

(30) Priority: 23.12.2002 SE 0203834
(43) Date of publication of application: 28.09.2005
(73) Proprietor: Scania CV AB (publ), 151 87 Södertälje (SE)
(72) Inventor: CATOVIC, Rade, S-169 65 Solna (SE); NÄSMAN, Erik, S-121 39 Johanneshov (SE); HEDE, Martin, S-152 30 Södertälje (SE); BRUCE, Niklas, S-151 39 Södertälje (SE); ROHDEN, Carl, S-411 31 Göteborg (SE); ARVIDSSON, Hans-Olov, S-414 51 Göteborg (SE); BERGEVALD, Gunnar, S-418 42 Göteborg (SE)
(74) Representative: Sjögren, Stina
(86) International application number: PCT/SE2003/001994
(87) International publication number: WO 2004/056641

(56) References cited:
- WO-A1-00/09351
- SE-C2- 518 723
- US-A- 4 330 149
- US-A- 6 073 714
- US-B1- 6 168 229
- US-B1- 6 206 121

## Description

The present invention relates to an anti-roll bar as defined by the features of the preamble of claim 1. Such an anti-roll bar is described in patent US-A- 6 073 714.

Heavy vehicles, e.g. trucks, often have a cab which is springingly suspended relative to the vehicle's frame at three or four different points. The rear edge of the cab may be suspended, for example, by an air spring arrangement of a known kind. The front edge of the cab of such vehicles is often provided with an anti-roll bar whose purpose is to damp out the various kinds of springing movements which may occur at the various suspension points. In such cases, a forward anti-roll bar comprises a one-piece transverse torsion bar which has at each of its axial ends a link arm directed in the longitudinal direction of the vehicle. Each link arm is directly or indirectly supported by the cab at one end and by the frame at the other end.

A problem with anti-roll bars of this kind is that when unhindered access is desired to the space behind the transverse torsion bar of the anti-roll bar, e.g. when the vehicle's radiator has to be taken out for servicing of the radiator module, the anti-roll bar has to be removed. This entails undoing the fastenings of the anti-roll bar to the cab and to the frame, a troublesome and time-consuming operation.

### Brief description of the invention

The problem of having to undo the fastenings of the anti-roll bar to the cab and to the frame when the anti-roll bar is being removed is solved according to the invention by arranging an anti-roll bar which in the suspension of a sprung driver's cab on the vehicle frame connects the cab to the frame, and by the anti-roll bar comprising two shanks and at least one reaction rod which are detachably connected together and by it being possible to disassemble the reaction rod from the shanks without undoing the fastenings of the anti-roll bar to the cab or to the frame.

An anti-roll bar having the characteristics of claim 1 affords the advantage that there is no need to undo the fastenings of the anti-roll bar to the cab or to the frame when unhindered access is desired to the space behind the reaction rod, e.g. on the occasion of radiator servicing, this being achieved by disassembling the reaction rod, which means, for example, that removing the vehicle's radiator is an easier operation and takes less time, thereby reducing costs.

### Brief description of the drawings

The invention is described in more detail below with reference to the following drawings, in which:
Figure 1 depicts schematically a view of a forward suspension and springing arrangement for a cab 1 for a heavy vehicle,
Figure 2 depicts schematically a perspective view of an anti-roll bar according to an embodiment of the invention, and
Figure 3 depicts schematically a view from above of an anti-roll bar according to the embodiment of the invention depicted in Figure 2.

### Description of preferred embodiments

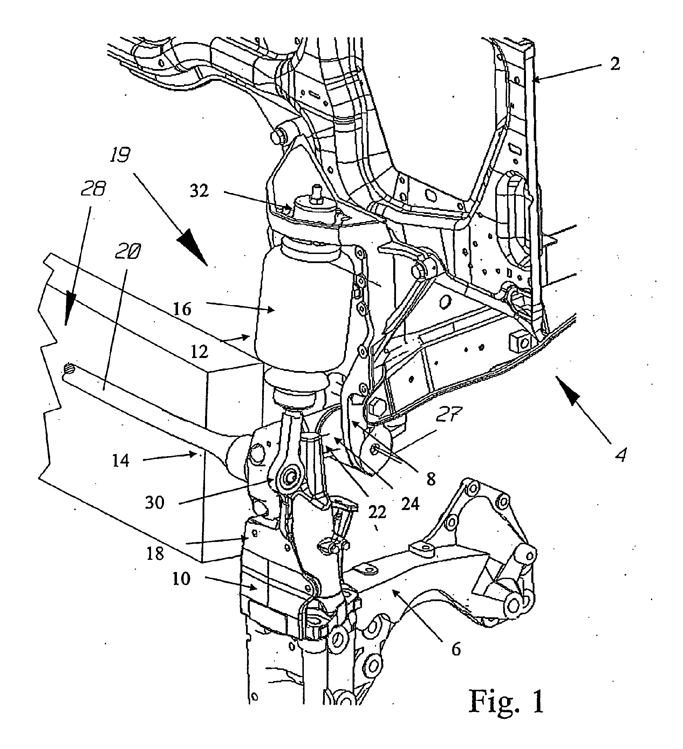

Figure 1 depicts schematically a view of a forward suspension and springing arrangement for a cab 2 for a heavy vehicle 4. The arrangement is symmetrical about a vertical plane through the middle of the vehicle 4 in the latter's longitudinal direction, so only one (the left) portion is depicted. The cab 2 of a heavy vehicle 4, e.g. a truck, is usually suspended on a vehicle frame 6 which mainly comprises two longitudinal parallel side-members. The latter are tied together by a number of transverse members, and an engine is fastened to the frame 6 in a conventional manner. The rear edge of the cab 2 is suspended in any known manner, e.g. by an air spring arrangement. The forward suspension arrangement of the cab 2 relative to the frame 6 comprises a bracket 8 secured to the cab 2, a fastening portion 10 fastened to the frame, a spring element 12 and an anti-roll bar 14.

The spring element 12, which comprises a here undepicted central shock-absorber and an air spring 16, connects the bracket 8 secured to the cab 2 to the fastening portion 10 which is fastened to the frame and which forms part of the vertical turret 18 at the forward edge of the frame 6.

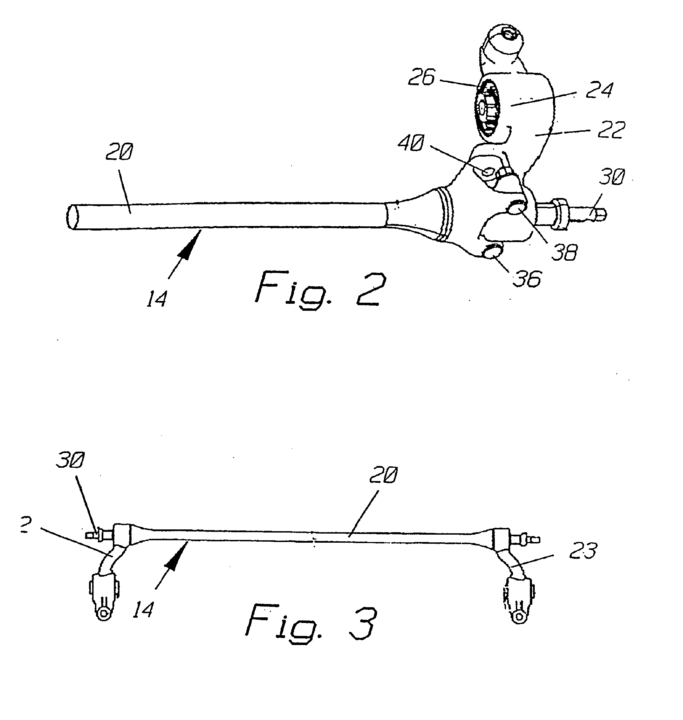

The purpose of the anti-roll bar 14 is to damp in a known manner various different kinds of springing movements of the spring element 12, and said anti-roll bar comprises a reaction rod 20 which is arranged in the transverse direction of the vehicle 4 between the upper ends of the two turrets 18 and which has each of its ends arranged in respective shanks 22,23 (the shank 23 is depicted in Figure 3) which are oriented in the longitudinal direction of the vehicle 4 and are in this case directed rearwards. The rear portion 24 of each shank 22,23 is supported on, and for rotation relative to, the lower portion of the bracket 8 by means of a bushing arrangement 26 (see Figure 2) which allows relative rotation between each shank 22,23 and the bracket 8 about a horizontal spindle 27 which extends substantially transversely relative to the vehicle 2. The shanks 22,23 are directly or indirectly supported by the cab 2 at one end and the frame 6 at the other end.

According to the invention, to enable unhindered access to the space 19 behind the reaction rod 20 of the anti-roll bar 14, e.g. for taking the vehicle's radiator 28 out of the engine compartment for inspection and possible repairs without having to undo the fastenings of the anti-roll bar 14 to the cab 2 or to the frame 6, the suspension of a sprung driver's cab 2 on a vehicle frame 6 is provided with an anti-roll bar 14 which connects the cab 2 to the frame 6, which anti-roll bar 14 comprises two shanks 22,23 (the shank 23 is depicted in Figure 3) and at least one reaction rod 20 which are detachably connected together whereby the reaction rod 20 can be disassembled from the shank 22,23 without having to undo the fastenings of the anti-roll bar 14 to the cab 2 or the frame 6 when, for example, the radiator 28 of the vehicle 4 is being removed. Improving access to the space 19 behind the reaction rod 20 in this way saves both time and costs. The possibility of removing the reaction rod 20 so that access to the space 19 behind the reaction rod 20 is improved also facilitates not only, for example, said removal of the radiator 28 of the vehicle 4 but also all servicing of the forward portions of the engine and all access to and replacement of equipment under the cab 2 such as the engine, fan housing, noise absorbers, various pipes and conductors etc.

At the end portion of the reaction rod 20, a pivot pin 30 is supported for rotation, but secured against axial movement, relative to the anti-roll bar 14, preferably by a conventional ball bearing. The pivot pin 30 is secured to the turret 18 which is fastened to the frame. The spring element 12 is secured at its upper end to the bracket 8 via a rubber bushing 32 and at its lower end to the pivot pin 30 via a ball bearing.

Figure 2 depicts schematically a perspective view of an anti-roll bar according to an embodiment of the invention. The arrangement is symmetrical about a vertical plane through the middle of the vehicle 4 in the latter's longitudinal direction, so only one (the left) portion is depicted. The diagram shows the anti-roll bar 14 comprising a reaction rod 20 which has each of its ends arranged in, and for joint rotation with, respective shanks 22,23 (the shank 23 is depicted in Figure 3) which are oriented in the longitudinal direction of the vehicle 4 and are in this case directed rearwards. The rear portion 24 of the shank 22 is supported for rotation relative to the lower portion of the bracket 8 by means of a bushing arrangement 26 which allows relative rotation between the shank 22 and the bracket 8 about a horizontal spindle 27 which extends substantially transversely relative to the vehicle 2. At the end portion of the reaction rod 20, a pivot pin 30 is supported for rotation, but secured against axial movement, relative to the anti-roll bar 14, preferably by a conventional ball bearing. The pivot pin 30 is secured to the turret 18 which is fastened to the frame. The shanks 22,23 (the shank 23 is depicted in Figure 3) and the reaction rod 20 are detachably connected together and in this embodiment the reaction rod 20 can be disassembled from the shanks 22,23 by releasing the threaded connection which comprises two screws 36,38 and a spigot 40. Reassembly, which is also easy to perform, is in the reverse order.

The bushing arrangement 26 for the anti-roll bar 14 takes with advantage the form of a prefabricated unit. The bushing arrangement 26 comprises inter alia an outer casing with a cylindrical shell surface facing outwards which is intended to be pressed into a hole in the shank 22, and an inner casing via which the anti-roll bar 14 is supported by the cab 2. A suitable manufacturing method may be to cast, forge or mill the shank 22 integrally and thereafter to drill through its rear portion 24 a hole adapted to accommodating the bushing arrangement 26.

Figure 3 depicts schematically a view from above of an anti-roll bar according to the embodiment of the invention depicted in Figure 2. The diagram shows the anti-roll bar 14 comprising a reaction rod 20 which has each of its ends arranged in, and for joint rotation with, respective shanks 22,23 which are oriented in the longitudinal direction of the vehicle 4 and are in this case directed rearwards. The arrangement is symmetrical about a vertical plane through the middle of the vehicle 4 in the latter's longitudinal direction.

As above, the weight of the cab is supported by the spring element, i.e. the cab springs in the form of, for example, air springs or coil springs, hold the cab up. According to the embodiments, the anti-roll bar's shank fastening to the reaction rod is secured against movement relative to the frame, while the other end is supported by the cab. The reverse situation is also possible. Moreover, the shanks are directed rearwards according to the embodiments, but they may also be turned so that they are directed forwards instead.

## Claims

1. An anti-roll bar which in the suspension of a sprung driver's cab (2) on a vehicle frame (6) connects the cab (2) to the frame (6), whereby the anti-roll bar (14) comprises two shanks (22,23) and at least one reaction rod (20), **characterised in that** the two shanks and the reaction rod are detachably connected together whereby the reaction rod (20) can be disassembled from the shanks (22,23), thereby improving access to the space (19) behind the reaction rod (20) without undoing the fastenings of the anti-roll bar (14) to the cab (2) or to the frame (6).

2. An anti-roll bar according to claim 1, **characterised in that** the anti-roll bar (14) is supported for rotation relative to both the cab (2) and the frame (6).

3. An anti-roll bar according to either of the foregoing claims, **characterised in that** the shanks (22,23) are oriented substantially in the longitudinal direction of the vehicle (4) and situated on either side of a longitudinal vertical plane through the middle of the vehicle (4), and that the reaction rod (20) is transverse.

4. An anti-roll bar according to any one of the foregoing claims, **characterised in that** each of the shanks (22,23) is supported by at least one vehicle portion which forms part either of the driver's cab (2) or the vehicle frame (6) in order to allow relative rotation between the shanks (22,23) and the vehicle portion about a spindle (27) oriented substantially in the transverse direction of the vehicle.

5. An anti-roll bar according to claim 4, **characterised in that** each of the shanks (22,23) is supported relative to the vehicle portion by means of its respective bushing unit (26).

6. An anti-roll bar according to either of claims 4 and 5, **characterised in that** said spindle (27) is fixed to a bracket (8) which is itself fixed to the cab (2) or the frame (6).

7. An anti-roll bar according to any one of the foregoing claims, **characterised in that** the reaction rod (20) is easy to remove and refit because the reaction rod (20) is fastened to the shanks (22,23) by threaded connections.

8. A forward suspension and springing arrangement for a cab for a heavy vehicle, **characterised in that** it comprises an anti-roll bar (14) according to any one of claims 1 to 7.

9. A vehicle, **characterised in that** it comprises an anti-roll bar (14) according to any one of claims 1 to 7.

## Patentansprüche

1. Anti-Kippstange, die in einer Aufhängung einer gefederten Fahrerkabine (2) an einem Fahrzeugrahmen (6) die Kabine (2) mit dem Rahmen (6) verbindet, wobei die Anti-Kippstange (14) zwei Schenkel (22, 23) und wenigstens eine Reaktionsstange (20) umfasst, **dadurch gekennzeichnet, dass** die beiden Schenkel und die Reaktionsstange lösbar miteinander verbunden sind, wodurch die Reaktionsstange (20) von den Schenkeln (22, 23) abgebaut werden kann, wodurch der Zugang zu dem Raum (19) hinter der Reaktionsstange (20) verbessert wird, ohne die Befestigungen der Anti-Kippstange (14) zu der Kabine (2) oder zu dem Rahmen (6) zu lösen.

2. Anti-Kippstange nach Anspruch 1, **dadurch gekennzeichnet, dass** die Anti-Kippstange (14) zur Drehung sowohl relativ zu der Kabine (2) als auch zu dem Rahmen (6) gelagert ist.

3. Anti-Kippstange nach einem der vorangehenden Ansprüche, **dadurch gekennzeichnet, dass** die Schenkel (22, 23) im Wesentlichen in der Längsrichtung des Fahrzeugs (4) orientiert und auf jeder Seite einer vertikalen Längsebene durch die Mitte des Fahrzeugs (4) angeordnet sind, und dass die Reaktionsstange (20) quer verläuft.

4. Anti-Kippstange nach einem der vorangehenden Ansprüche, **dadurch gekennzeichnet, dass** jeder der Schenkel (22, 23) von wenigstens einem Fahrzeugteil gelagert ist, das entweder einen Teil der Fahrerkabine (2) oder des Fahrzeugrahmens (6) bildet, um eine Relativdrehung zwischen den Schenkeln (22, 23) und dem Fahrzeugteil um eine Spindel (27) zuzulassen, die im Wesentlichen in Querrichtung des Fahrzeugs orientiert ist.

5. Anti-Kippstange nach Anspruch 4, **dadurch gekennzeichnet, dass** jeder der Schenkel (22, 23) relativ zu dem Fahrzeugteil mittels einer jeweiligen Buchseneinheit (26) gelagert ist.

6. Anti-Kippstange nach einem der Ansprüche 4 und 5, **dadurch gekennzeichnet, dass** die Spindel (27) an einer Klammer (8) fixiert ist, die selbst an der Kabine (2) oder dem Rahmen (6) fixiert ist.

7. Anti-Kippstange nach einem der vorangehenden Ansprüche, **dadurch gekennzeichnet, dass** die Reaktionsstange (20) einfach entfernbar und wieder einsetzbar ist, da die Reaktionsstange (20) mit den Schenkeln (22, 23) über Gewindeverbindungen verbindbar ist.

8. Vordere Lager- und Federanordnung für eine Kabine für ein Schwerlastfahrzeug, **dadurch gekennzeichnet, dass** eine Anti-Kippstange (14) nach einem der Ansprüche 1 bis 7 umfasst.

9. Fahrzeug **dadurch gekennzeichnet, dass** es eine Anti-Kippstange (14) nach einem der Ansprüche 1 bis 7 umfasst.

## Revendications

1. Barre stabilisatrice qui, dans la suspension d'une cabine de conducteur sur ressorts (2) située sur un châssis (6) de véhicule, relie la cabine (2) au châssis (6), la barre stabilisatrice (14) comprenant deux tiges (22, 23) et au moins une tringle de réaction (20), **caractérisée en ce que** les deux tiges et la tringle de réaction sont reliées ensemble de manière détachable, la tringle de réaction (20) pouvant être désassemblée des tiges (22, 23), ce qui améliore, ainsi, l'accès à l'espace (19) se trouvant derrière la tringle de réaction (20) sans défaire les attaches de la barre stabilisatrice (14) à la cabine (2) ou au châssis (6).

2. Barre stabilisatrice selon la revendication 1, **caractérisée en ce que** la barre stabilisatrice (14) est supportée en vue d'une rotation aussi bien par rapport à la cabine (2) que par rapport au châssis (6).

3. Barre stabilisatrice selon l'une ou l'autre des revendications précédentes, **caractérisée en ce que** les tiges (22, 23) sont orientées sensiblement dans la direction longitudinale du véhicule (4) et situées sur chaque côté d'un plan longitudinal vertical à travers le milieu du véhicule (4), et **en ce que** la tringle de réaction (20) est transversale.

4. Barre stabilisatrice selon l'une quelconque des revendications précédentes, **caractérisée en ce que** chacune des tiges (22, 23) est supportée par au moins une partie du véhicule qui fait partie, soit de la cabine (2) du conducteur, soit du châssis (6) du véhicule, afin de permettre une rotation relative entre les tiges (22, 23) et la partie du véhicule entourant une broche (27) orientée sensiblement dans la direction transversale du véhicule.

5. Barre stabilisatrice selon la revendication 4, **caractérisée en ce que** chacune des tiges (22, 23) est supportée par rapport à la partie du véhicule au moyen de son groupe de bagues (26) respectif.

6. Barre stabilisatrice selon l'une ou l'autre des revendications 4 et 5, **caractérisée en ce que** ladite broche (27) est fixée à un support (8) qui est fixé lui-même à la cabine (2) ou au châssis (6).

7. Barre stabilisatrice selon l'une quelconque des revendications précédentes, **caractérisée en ce que** la tringle de réaction (20) est facile à enlever et à remettre en état du fait que la tringle de réaction (20) est fixée aux tiges (22, 23) par des liaisons filetées.

8. Dispositif avancé de suspension et à ressorts pour cabine de véhicule lourd, **caractérisé en ce qu'**il comprend une barre stabilisatrice (14) selon l'une quelconque des revendications 1 à 7.

9. Véhicule, **caractérisé en ce qu'**il comprend une barre stabilisatrice (14) selon l'une quelconque des revendications 1 à 7.
